(19) Europäisches Patentamt
European Patent Office
Office européen des brevets

(11) **EP 4 361 211 A1**

(12) **EUROPEAN PATENT APPLICATION**
published in accordance with Art. 153(4) EPC

(43) Date of publication:
**01.05.2024 Bulletin 2024/18**

(21) Application number: **22828541.7**

(22) Date of filing: **24.06.2022**

(51) International Patent Classification (IPC):
*C08L 23/10* [(2006.01)]    *B65D 30/02* [(2006.01)]
*C08F 2/44* [(2006.01)]    *C08F 4/654* [(2006.01)]
*C08F 255/02* [(2006.01)]    *C08L 23/08* [(2006.01)]
*C08L 23/16* [(2006.01)]

(52) Cooperative Patent Classification (CPC):
**B65D 29/00; C08F 2/44; C08F 4/654; C08F 255/02; C08L 23/08; C08L 23/10; C08L 23/16**

(86) International application number:
**PCT/JP2022/025350**

(87) International publication number:
**WO 2022/270625 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2021 JP 2021105706**

(71) Applicant: **Basell Poliolefine Italia S.r.l.**
**20121 Milano (IT)**

(72) Inventors:
- **KAWAHARADA Hiroshi**
  **Kawasaki-shi, Kanagawa 210-0863 (JP)**
- **NAKAJIMA Takeshi**
  **Kawasaki-shi, Kanagawa 210-0863 (JP)**

(74) Representative: **LyondellBasell**
**c/o Basell Poliolefine Italia**
**Intellectual Property**
**P.le Donegani 12**
**44122 Ferrara (IT)**

(54) **POLYPROPYLENE-BASED RESIN COMPOSITION AND METHOD FOR PRODUCING SAME, FILM MOLDED ARTICLE, PACKAGE TO BE BROUGHT INTO CONTACT WITH FOOD, CONTAINER TO BE BROUGHT INTO CONTACT WITH FOOD, AND RETORT POUCH**

(57) The present invention provides a polypropylene-based resin composition comprising a polypropylene-based resin (A) including a continuous phase consisting of a propylene polymer (a1) and a rubber phase consisting of a copolymer (a2) of ethylene and $\alpha$-olefin having 3-10 carbon atoms, and an optional component ethylene/$\alpha$-olefin copolymer (B) which is a copolymer of ethylene and $\alpha$-olefin having 3-10 carbon atoms.

EP 4 361 211 A1

**Description**

TECHNICAL FIELD

The present invention relates to a polypropylene-based resin composition, a method for producing the same, a film molding, a packaging to be in contact with food, a container to be in contact with food, and a retort pouch. This application claims priority based on Japanese Patent Application No. 2021-105706 filed in Japan on June 25, 2021, the contents of which are incorporated herein.

BACKGROUND TECHNOLOGY

Polypropylene is used for various purposes because it has excellent physical properties such as impact resistance, rigidity, transparency, chemical resistance, and heat resistance.
For example, Patent Document 1 discloses a polypropylene-based resin composition suitable for obtaining an injection molded article with an excellent balance of rigidity and impact resistance and a good appearance.

PRIOR ART DOCUMENT

Patent document 1: Japanese Unexamined Patent Application Publication No. 2019-189818.

SUMMARY OF THE INVENTION

PROBLEM TO BE SOLVED BY THE INVENTION

Applications of film moldings of polypropylene-based resin compositions include, for example, packaging materials such as retort pouches for foods. These applications require not only mechanical properties such as rigidity and impact resistance, but also chemical properties such as a reduction in the amount of components eluted when in contact with oil or solvents. In particular, for applications in retort pouches to be in contact with food, it is required that the components of the film molding are hardly ooze into the food. For example, the tests established by the US Food and Drug Administration (FDA) stipulate that the elution amount (extraction amount) in n-hexane should be 2.6 $\mu$g or less. Furthermore, in some cases, high heat sealability (weldability), high impact resistance at low temperatures, and excellent appearance are required for the application for retort pouches.
The polypropylene-based resin composition disclosed in Patent Document 1 has a high MFR, so it is not suitable for the purpose of obtaining a film molding. Furthermore, no consideration is given to meeting standard values of FDA tests, and no consideration is given to meeting various mechanical and chemical properties required for film moldings.
The present invention provides a polypropylene-based resin composition which allows to obtain a film molding that has a small amount of elution into n-hexane in the FDA test and has an excellent balance of rigidity, low-temperature impact strength, weldability, and resistance to whitening due to bending (whitening resistance), a method for producing the same, and a film molding. The present invention also provides a packaging to be in contact with food, a container to be in contact with food, and a retort pouch.

ISSUES TO BE ADDRESSED

The present invention has the following aspects.

[1] A polypropylene-based resin composition comprising

a polypropylene-based resin (A) including a continuous phase consisting of a propylene polymer (a1) and a rubber phase consisting of a copolymer (a2) of ethylene and $\alpha$-olefin having 3 to 10 carbon atoms, and
an ethylene/$\alpha$-olefin copolymer (B) which is a copolymer of ethylene and $\alpha$-olefin having 3 to 10 carbon atoms as an optional component,
wherein the content of the polypropylene-based resin (A) is 90 % by weight or more and less than 100 % by weight with respect to the total weight of the polypropylene-based resin composition,
the content of the ethylene/$\alpha$-olefin copolymer (B) is 0 to 10 % by weight with respect to the total weight of the (A) and (B),
the MFR of the polypropylene-based resin composition at a temperature of 230 °C and a load of 2.16 kg is 0.5 to 4.0 g/10 min,
the ratio ($M_w/M_n$) between the weight average molecular weight $M_w$ and the number average molecular weight

$M_n$ of the propylene polymer (a1) is less than 7,

the content of ethylene-derived units in the propylene polymer (a1) is 0.5 % by weight or less with respect to the total weight of the propylene polymer (a1),

the content of the copolymer (a2) is 30 to 43 % by weight with respect to the total weight of the polypropylene-based resin (A),

the content of ethylene-derived units in the copolymer (a2) is 25 to 40 % by weight with respect to the total weight of the copolymer (a2),

the xylene-soluble portion of the polypropylene-based resin (A) has an intrinsic viscosity in tetrahydronaphthalene at 135 °C of 2.5 to 3.5 dl/g, and

the MFR of the polypropylene-based resin (A) at a temperature of 230 °C and a load of 2.16 kg is 0.5 to 4.0 g/10 minutes.

[2] The polypropylene-based resin composition according to [1], wherein the propylene polymer (a1) and the copolymer (a2) are mixed by polymerization, the polypropylene-based resin (A) is a polymerization mixture prepared by using a catalyst containing the following components (a) to (c);

(a) a solid catalyst containing magnesium, titanium, halogen, and a phthalate-based compound as an electron donor compound,
(b) an organoaluminum compound, and
(c) an organosilicon compound as an external electron donor compound.

[3] A method for producing the polypropylene-based resin composition according to [1] or [2], comprising the step of polymerizing ethylene monomer and α-olefin monomer having 3 to 10 carbon atoms in the presence of the propylene polymer (a1) using a catalyst containing the following components (a) to (c) to obtain the polypropylene-based resin (A);

(a) a solid catalyst containing magnesium, titanium, halogen, and a phthalate-based compound as an electron donor compound as essential components,
(b) an organoaluminum compound, and
(c) an organosilicon compound as an external electron donor compound.

[4] A film molding formed from the polypropylene-based resin composition according to [1] or [2].
[5] The film molding according to [4], used as a packaging or a container to be in contact with food.
[6] The film molding according to [4] or [5], used as at least a part of a retort pouch.
[7] A packaging to be in contact with food, formed from the film molding according to [4].
[8] A container to be in contact with food, formed from the film molding according to [4].
[9] A retort pouch formed from the film molding according to [4].

EFFECTS OF THE INVENTION

By using the polypropylene-based resin composition of the present invention, a film molding can be obtained that satisfies the standard values of FDA tests and is suitable for retort pouches to be in contact with food. In addition, the film molding of the present invention has an excellent balance of rigidity, low-temperature impact strength, weldability, and whitening resistance, so it can be used not only for applications to be in contact with food, but also for packagings or containers to package various goods.

In addition to packaging applications, it may be used for any purposes including, for example, miscellaneous goods, daily necessities, home appliance parts, electrical and electronic parts, automobile parts, housing parts, toy parts, furniture parts, building material parts, packaging parts, industrial materials, logistics materials, agricultural materials, etc.

BRIEF DESCRIPTION OF THE DRAWINGS

[FIG. 1] Fig. 1 describes a cross-sectional view illustrating the heat sealing of film samples.
[FIG. 2] Fig. 2 is a perspective view of the illustrative film molding of the present invention.
[FIG. 3] Fig. 3 is a perspective view of the illustrative food container of the present invention.
[FIG. 4] Fig. 4 is a front view of the illustrative retort pouch for food of the present invention.

EMBODIMENTS FOR IMPLEMENTING THE INVENTION

<Polypropylene-based resin composition>

The polypropylene-based resin composition of the present invention comprises a polypropylene-based resin (A) (hereinafter also referred to as component (A)) including a continuous phase consisting of a propylene polymer (hereinafter also referred to as component (a1)) and a rubber phase consisting of a copolymer of ethylene and $\alpha$-olefin having 3 to 10 carbon atoms (hereinafter also referred to as component (a2)).

Furthermore, as an optional component, it may comprise or not comprise an ethylene/$\alpha$-olefin copolymer (B) (hereinafter also referred to as component (B)), which is a copolymer of ethylene and $\alpha$-olefin having 3 to 10 carbon atoms.

The content of the polypropylene-based resin (A) is between 90% by weight or more and less than 100% by weight with respect to the total weight of the polypropylene-based resin composition, and the lower limit is preferably 90% by weight or more, more preferably 95% by weight or more, and more preferably 99% by weight or more.

If it is at or more than the lower limit of the above range, the above-mentioned effects of the present invention can be sufficiently obtained.

If it is less than the upper limit of the above range, there is room for containing component (B) or other components.

The content of the ethylene/$\alpha$-olefin copolymer (B) is 0 to 10% by weight with respect to the total weight of component (A) and component (B), and the upper limit is preferably 10% by weight or less, more preferably 5% by weight or less, and even more preferably 0% by weight.

When the content exceeds 0% by weight, which is the lower limit of the above range, the impact resistance of the film molding increases. However, from the viewpoint of maintaining rigidity, it is preferable that the content is 0% by weight. When the content is 10% by weight or less, which is the upper limit of the above range, the amount eluted into n-hexane in the FDA test of the film molding can be sufficiently reduced.

The MFR of the polypropylene-based resin composition at a temperature of 230°C and a load of 2.16 kg is 0.5 to 4.0 g/10 minutes, and the lower limit is preferably 1.0 g/10 minutes or more, and more preferably 1.5 g/10 minutes or more. Further, the upper limit is preferably 3.5 g/10 minutes or less, more preferably 3.0 g/10 minutes or less, and even more preferably 2.5 g/10 minutes or less. In other words, the examples include the ranges of 0.5 to 3.5 g/10 minutes, 0.5 to 3.0 g/10 minutes, 0.5 to 2.5 g/10 minutes, 1.0 to 4.0 g/10 minutes, 1.0 to 3.5 g/10 minutes, 1.0 to 3.0 g /10 minutes, 1.0 to 2.5 g/10 minutes, 1.5 to 4.0 g/10 minutes, 1.5 to 3.5 g/10 minutes, 1.5 to 3.0 g/10 minutes, 1.5 to 2.5 g/10 minutes. Here, the MFR is a value measured by a measurement method described herein later.

When it is at or more than the lower limit of the above range, film moldability is excellent. When it is at or less than the upper limit of the above range, the mechanical properties of the film molding can be improved.

[Polypropylene-based resin (A)]

The polypropylene-based resin (A) included in the polypropylene-based resin composition of the present invention is an embodiment of an impact-resistant polypropylene polymer specified by JIS K6921-1, and is composed of two or more phases including a continuous phase of propylene polymer (component (a1)) and a rubber phase of ethylene/$\alpha$-olefin copolymer (component (a2)) present in the continuous phase as a dispersed phase.

The polypropylene-based resin (A) may be a mixed resin in which component (a1) and component (a2) are mixed during polymerization, or in which component (a1) and component (a2), obtained separately, are mixed by melt kneading. It is preferable that component (a1) and component (a2) are mixed during polymerization (polymerization mixture) because the excellent balance between rigidity, low-temperature impact resistance and tensile properties (hereinafter also referred to as "mechanical physical property balance") is obtained at lower cost.

In the polymerization mixture, component (a1) and component (a2) can be mixed each other on the submicron order and a polypropylene-based resin composition based on the polymerization mixture exhibits an excellent balance of mechanical physical properties.

On the other hand, if a simple mechanical mixture obtained by melt-kneading of component (a1) and component (a2), obtained separately, is used to achieve similar uniform mixing and obtain an excellent balance of mechanical physical properties, the manufacturing costs increase due to the need for separate processes such as storage, transport, measuring, mixing, melting and kneading. This is also unfavorable from the viewpoint of energy costs.

The reason why the polymerization mixture and the mechanical mixture may exhibit different physical properties is presumed to be due to the difference in the dispersion state of component (a2) in component (a1). Currently, there is no known practical means for analyzing the dispersion state of component (a2) in the molecular level, including the state of the interface with component (a1). The method for producing the polypropylene-based resin (A) will be explained in detail later.

Intrinsic viscosity of the xylene-soluble portion of the polypropylene-based resin (A) (hereinafter also referred to as "XSIV") is 2.5 to 3.5 dl/g, and the lower limit is preferably 2.7 dl/g or more. Further, the upper limit is preferably 3.3 dl/g or less. That is, examples include the ranges of 2.5 to 3.3 dl/g, 2.7 to 3.5 dl/g, and 2.7 to 3.3 dl/g. Here, XSIV is a value measured by a method described later.

When it is at or more than the lower limit of the above range, the sealing strength of the film molding increases.

When it is at or less than the upper limit of the above range, FE generated in the film molding can be reduced and poor appearance (appearance of spots) can be suppressed.

The ratio of the weight average molecular weight $M_w$ to the number average molecular weight $M_n$ ($M_w/M_n$), which is an index of the molecular weight distribution of the propylene polymer (component (a1)) constituting the polypropylene-based resin (A), is less than 7. When it is less than 7, the low-temperature impact resistance and whitening resistance of the film molding increases.

The lower limit of the above ratio is not particularly limited, and, for example, 3 or more can be mentioned as a guide. Here, the weight average molecular weight $M_w$ and number average molecular weight Mn of the propylene polymer are the values measured by the method described below.

Ethylene-derived unit content (hereinafter also referred to as "C2") in the propylene polymer (component (a1)) constituting the polypropylene-based resin (A) is 0.5% by weight or less, preferably 0.3% by weight or less, with respect to the total weight of the propylene polymer.

When C2 is at or less than the upper limit value, the rigidity of the film molding increases. The lower limit of C2 is not particularly limited and may be 0% by weight.

In other words, the propylene polymer may be a polypropylene homopolymer consisting only of propylene-derived units, or a copolymer consisting of between 99.5% by weight or more and less than 100% by weight of propylene-derived units and between more than 0% by weight and 0.5% by weight or less of ethylene-derived units. C2 is measured by 13C-NMR method.

The ethylene/α-olefin copolymer (component (a2)) constituting the polypropylene-based resin (A) is a copolymer having an ethylene-derived unit and an α-olefin-derived unit having 3 to 10 carbon atoms.

The content of ethylene-derived units in component (a2) is 25 to 40% by weight with respect to the total weight of component (a2), and the lower limit is preferably 28% by weight or more. Further, the upper limit is preferably 35% by weight or less, more preferably 33% by weight or less. That is, examples include the ranges of 25 to 35% by weight, 25 to 33% by weight, 28 to 40% by weight, 28 to 35% by weight, and 28 to 33% by weight.

When it is at or more than the lower limit of the above range, the low-temperature impact resistance of the film molding increases.

When it is at or less than the upper limit of the above range, the amount eluted into n-hexane in the FDA test can be sufficiently reduced for the film molding. Moreover, whitening resistance can be improved.

The content of ethylene-derived units in component (a2) is measured by 13C-NMR method.

The content of the ethylene/α-olefin copolymer (component (a2)) with respect to the total weight of the polypropylene-based resin (A) is 30 to 43% by weight, and the lower limit is preferably 31% by weight or more. Further, the upper limit is preferably 38% by weight or less, more preferably 35% by weight or less. That is, examples include the ranges of 30 to 38% by weight, 30 to 35% by weight, 31 to 43% by weight, 31 to 38% by weight, and 31 to 35% by weight.

When it is at or more than the lower limit of the above range, the low-temperature impact resistance of the film molding increases.

If it is at or less than the upper limit of the above range, it is possible to reduce the risk of clogging the flow path on the production equipment due to the deterioration of powder fluidity during the production of polypropylene-based resin (A), so that polypropylene-based resin (A) can be stably produced continuously.

Examples of α-olefin constituting the ethylene/α-olefin copolymer (component (a2)) include propylene (1-propene), 1-butene, 1-pentene, 1-hexene, and 1-octene.

Specific examples of component (a2) include ethylene/propylene copolymer, ethylene/butene copolymer, ethylene/pentene copolymer, ethylene/hexene copolymer, ethylene/octene copolymer, and the like.

Among these, ethylene/propylene copolymers are preferred in consideration of improving the productivity of the polypropylene-based resin (A).

The MFR of the polypropylene-based resin (A) at a temperature of 230 °C and a load of 2.16 kg is 0.5 to 4.0 g/10 minutes, and the lower limit is preferably 1.0 g/10 minutes or more, and even more preferably 1.5 g/10 minutes or more. Further, the upper limit is preferably 3.5 g/10 minutes or less, more preferably 3.0 g/10 minutes or less, and even more preferably 2.5 g/10 minutes or less. In other words, examples include the ranges of 0.5 to 3.5 g/10 minutes, 0.5 to 3.0 g/10 minutes, 0.5 to 2.5 g/10 minutes, 1.0 to 4.0 g/10 minutes, 1.0 to 3.5 g/10 minutes, 1.0 to 3.0 g/10 minutes, and 1.0 to 2.5 g/10 minutes. Here, MFR is a value measured by a measurement method described later.

When it is at or more than the lower limit of the above range, film moldability is excellent. When it is at or less than the upper limit of the above range, the sealing strength of the film molding can be improved and the low-temperature impact resistance can be improved.

[Ethylene/α-olefin copolymer (B)]

The ethylene/α-olefin copolymer (B) is a copolymer of ethylene and α-olefin having 3 to 10 carbon atoms. Examples of α-olefin include propylene (1-propene), 1-butene, 1-pentene, 1-hexene, and 1-octene.

Specific examples of the ethylene/α-olefin copolymer (B) include ethylene/butene copolymer, ethylene/pentene copolymer, ethylene/hexene copolymer, ethylene/octene copolymer, and the like.

Among these, ethylene/butene copolymer or ethylene/octene copolymer is preferred in consideration of ease of procurement as a raw material, economic efficiency, etc.

The MFR of the ethylene/α-olefin copolymer (B) at a temperature of 190° C and a load of 2.16 kg is preferably 0.5 to 20 g/10 minutes. Here, MFR is a value measured by a measurement method described later.

When it is at or more than the lower limit of the above range, the fluidity of the polypropylene-based resin composition increases.

When it is at or less than the upper limit of the above range, the occurrence of blocking in the polypropylene-based resin composition can be suppressed, and the continuous productivity of the composition can be improved. Furthermore, the low-temperature impact resistance and tensile properties of the film molding are increased.

[Other components]

The polypropylene-based resin composition of the present invention may comprise polymers other than the polypropylene-based resin (A) and the ethylene/α-olefin copolymer (B) (other polymers) and/or additives as optional components within a range that does not impair the effects of the present invention.

Examples of the other polymers include propylene polymers other than the polypropylene-based resin (A), ethylene polymers other than the ethylene/α-olefin copolymer (B), elastomers, plastomers, ternary copolymers, and recycled polymers, etc. One type or two or more types of other polymers may be included. The content of other polymers may be adjusted as required depending on the application, but it is 10% by weight or less with respect to the total weight of the polypropylene-based resin composition. For example, it can be 8% by weight or less, 6% by weight or less, 4% by weight or less, 2% by weight or less, or 1% by weight or less. Examples of the additives include, for example, antioxidants, neutralizing agents, nucleating agents, weathering agents, pigments (organic or inorganic), internal and external lubricants, anti-blocking agents, antistatic agents, chlorine absorbers, heat stabilizers, light stabilizers, ultraviolet absorbers, slip agents, antifogging agents, flame retardants, dispersants, copper damage inhibitors, plasticizers, foaming agents, antifoaming agents, crosslinking agents, peroxides, oil extenders, etc. These additives may be used alone or two or more types may be used. The content may be a known amount.

<Method for producing polypropylene-based resin composition>

As a method for producing the polypropylene-based resin composition of the present invention, the examples include a method in which a polypropylene-based resin (A) and an optional ethylene/α-olefin copolymer (B) are mixed and then melt-kneaded.

Examples of the mixing method include dry blending using a mixer such as a Henschel mixer, a tumbler, and a ribbon mixer.

Examples of the melt-kneading method include a method of mixing while melting using a mixer such as a single-screw extruder, a twin-screw extruder, a Banbury mixer, a kneader, and a roll mill. The melting temperature during melt-kneading is preferably 160 to 350°C, more preferably 170 to 260°C. Further pelletizing may be conducted after melt-kneading.

[Production method of polypropylene-based resin (A)]

Polypropylene-based resin (A) is obtained by mixing a propylene polymer (component (a1)) and an ethylene/α-olefin copolymer (component (a2)) during polymerization. Alternatively, the component (a1) and the component (a2), produced separately, may be mixed by melt-kneading. It is preferable that the polypropylene-based resin (A) is a polymerization mixture wherein the component (a1) and component (a2) are mixed during polymerization.

Such a polymerization mixture is obtained by polymerizing ethylene monomer and α-olefin monomer in the presence of component (a1). According to this method, productivity is increased, and the dispersibility of component (a2) in component (a1) is increased, so that the balance of mechanical physical properties of the film molding obtained using this method is improved.

Hereinafter, a case in which a propylene monomer is used as the α-olefin monomer will be described, which can also be used in the production when using other α-olefin monomers.

As a method for producing the polymerization mixture, a multistage polymerization method is typically used.

For example, the polymerization mixture can be obtained as follows: propylene monomer and, if necessary, ethylene monomer are polymerized to obtain a propylene polymer in the first stage polymerization reactor of a polymerization apparatus equipped with two stages of polymerization reactors, and the resulting polypropylene polymer is supplied to the second stage polymerization reactor and the ethylene monomer and propylene monomer are polymerized therein.

Polymerization conditions may be similar to known polymerization conditions. For example, the first stage polymerization conditions include a slurry polymerization method in which propylene is in the liquid phase and the monomer density and productivity are high. As the second-stage polymerization conditions, a gas phase polymerization method that generally allows easy production of a copolymer with high solubility in propylene can be mentioned. The polymerization temperature is preferably 50 to 90 °C, more preferably 60 to 90 °C, even more preferably 70 to 90 °C. When the polymerization temperature is at or more than the lower limit of the above range, the productivity and the stereoregularity of the obtained polypropylene are more excellent.

The polymerization pressure is preferably 25 to 60 bar (2.5 to 6.0 MPa), more preferably 33 to 45 bar (3.3 to 4.5 MPa) when carried out in a liquid phase. When carried out in a gas phase, the pressure is preferably 5 to 30 bar (0.5 to 3.0 MPa), more preferably 8 to 30 bar (0.8 to 3.0 MPa). Polymerization (polymerization of propylene monomer, polymerization of ethylene monomer, propylene monomer, etc.,) is usually carried out using a catalyst. During polymerization, hydrogen may be added to adjust the molecular weight, if necessary. By adjusting the molecular weight of the propylene polymer or ethylene/propylene copolymer, the MFR of the polypropylene-based resin (A) and thus the MFR of the polypropylene-based resin composition can be adjusted.

Before the polymerization in the first stage polymerization reactor, propylene may be prepolymerized in order to form polymer chains in the solid catalyst component that will serve as a foothold for the subsequent main polymerization. Prepolymerization is usually carried out at a temperature of 40 °C or below, preferably 30 °C or below, more preferably 20 °C or below.

As a catalyst, a known olefin polymerization catalyst can be used.

As a catalyst for polymerizing ethylene monomer and propylene monomer in the presence of the propylene polymer, a stereospecific Ziegler-Natta catalyst is preferable, and a catalyst comprising the following component (a), component (b), and component (c) (hereinafter also referred to as "catalyst (X)") is particularly preferred;

(a) a solid catalyst containing magnesium, titanium, halogen, and a phthalate-based compound as an electron donor compound as essential components.
(b) an organoaluminum compound.
(c) an organosilicon compound as an external electron donor compound.

It is preferable that the polypropylene-based resin (A) is produced in the method having a step of polymerizing an ethylene monomer and an $\alpha$-olefin monomer (for example, a propylene monomer) using a catalyst (X) in the presence of the propylene polymer to obtain the polypropylene-based resin. By using the catalyst (X), a polypropylene-based resin (A) having each physical property within the above range can be easily obtained.

It is to be noted that the molecular weight and stereoregularity distribution of the resulting propylene polymer differ depending on the catalyst used (especially for the electron donor compound of (a)), and these differences affect crystallization behavior, etc., but the relationship between them in details have not been revealed. In order to clarify this, it is necessary to analyze both the molecular weight distribution and the stereoregularity distribution as the molecular structure, but this is complicated because components with different molecular weights and stereoregularities influence each other during the crystallization process, which makes interpretation of the influence of molecular weight and stereoregularity distribution on crystallization behavior more difficult. Furthermore, since actual film molding is carried out in a fluidized state of molten resin, it is not easy to understand the phenomenon even if advanced analytical techniques are used. Therefore, in a polypropylene-based resin composition obtained using a certain catalyst, it is almost impossible to specify the difference in crystallization behavior due to the distribution of molecular weight or stereoregularity numerically or in any other manner. The molecular weight distribution and stereoregularity distribution change not only by the type of catalyst mentioned above but also by thermal deterioration during melting and kneading, peroxide treatment, and the like.

Component (a) is prepared using, for example, a titanium compound, a magnesium compound, and an electron donor compound.

As the titanium compound used in component (a), a tetravalent titanium compound represented by the general formula: $Ti(OR)_gX_{4-g}$ (R is a hydrocarbon group, X is a halogen, $0 < g < 4$) is suitable.

Examples of the hydrocarbon group include methyl, ethyl, propyl, butyl, etc., and examples of the halogen include Cl, Br, etc.

More specific titanium compounds include titanium tetrahalides such as $TiCl_4$, $TiBr_4$, $TiI_4$; trihalogenated alkoxytitanium such as $Ti(OCH_3)Cl_3$, $Ti(OC_2H_5)Cl_3$, $Ti(On\text{-}C_4H_9)Cl_3$, $Ti(OC_2H_5)Br_3$, $Ti(O\text{-}isoC_4H_9)Br_3$; dihalogenated alkoxytitanium such as $Ti(OCH_3)_2Cl_2$, $Ti(OC_2H_5)_2Cl_2$, $Ti(On\text{-}C_4H_9)_2Cl_2$, $Ti(OC_2H_5)_2Br_2$; monohalogenated trialkoxytitanium such

as $Ti(OCH_3)_3Cl$, $Ti(OC_2H_5)_3Cl$, $Ti(O_n-C_4H_9)_3Cl$, $Ti(OC_2H_5)_3Br$; tetraalkoxytitanium such as $Ti(OCH_3)_4$, $Ti(OC_2H_5)_4$, $Ti(O_n-C_4H_9)_4$. These titanium compounds may be used alone or in combination of two or more types. Among the above titanium compounds, preferred are halogen-containing titanium compounds, more preferred are titanium tetrahalides, and particularly preferred are titanium tetrachloride (TiCl4).

Magnesium compounds used in component (a) include magnesium compounds having a magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butyl ethoxymagnesium, ethylbutylmagnesium, butylmagnesium hydride, and the like. These magnesium compounds can also be used in the form of a complex compound with, for example, organoaluminium, and may be in a liquid or solid state. Further suitable magnesium compounds include magnesium halides such as magnesium chloride, magnesium bromide, magnesium iodide, magnesium fluoride; alkoxymagnesium halides such as magnesium methoxychloride, ethoxymagnesium chloride, isopropoxymagnesium chloride, butoxymagnesium chloride, octoxymagnesium chloride; allyloxymagnesium halide such as phenoxymagnesium chloride, methylphenoxymagnesium chloride; alkoxymagnesium such as ethoxymagnesium, isopropoxymagnesium, butoxymagnesium, n-octoxymagnesium, 2-ethylhexoxymagnesium; dialkoxymagnesium such as dimethoxymagnesium, diethoxymagnesium, dipropoxymagnesium, dibutoxymagnesium, and ethoxymethoxymagnesium; allyloxymagnesium such as ethoxypropoxymagnesium, butoxyethoxymagnesium, phenoxymagnesium, and dimethylphenoxymagnesium. These magnesium compounds may be used alone or in combination of two or more types.

The electron donor compound used for component (a) preferably contains a phthalate-based compound as an essential component. When the catalyst (X) containing a phthalate-based compound as an electron donor is used, a polypropylene-based resin having a propylene polymer $M_w/M_n$ within the above range can be easily obtained. Examples of phthalate-based compounds include monoethyl phthalate, dimethyl phthalate, methyl ethyl phthalate, mono-isobutyl phthalate, mono-normal butyl phthalate, diethyl phthalate, ethyl isobutyl phthalate, ethyl normal butyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopentyl phthalate, didecyl phthalate, benzyl butyl phthalate, and diphenyl phthalate. Among them, diisobutyl phthalate is particularly preferred.

Examples of electron donor compounds in the solid catalyst other than phthalate-based compounds include succinate-based compounds and diether-based compounds.

The succinate-based compound may be an ester of succinic acid, or an ester of substituted succinic acid having a substituent such as an alkyl group at the 1st or 2nd position of the succinic acid. Specific examples include diethyl succinate, dibutyl succinate, diethyl methyl succinate, diethyl diisopropyl succinate, diallylethyl succinate, and the like.

Examples of diether-based compounds include 1,3-diether, such as 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3-dimethoxypropane, 2-(1-decahydronaphthyl)-1,3-dimethoxypropane, 2-(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3 -diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-propyl-2-pentyl-1,3-diethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimethoxypropane, 2,2-di-sec-butyl-1,3-dimethoxypropane, 2,2-di-tert-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, etc. Further specific examples of 1,3-diether-based compounds include the following. 1,1-bis(methoxymethyl)-cyclopentadiene; 1,1-bis(methoxymethyl)-2,3,4,5-tetramethylcyclopentadiene; 1,1-bis(methoxymethyl)-2,3,4,5-tetraphenylcyclopentadiene; 1,1-bis(methoxymethyl)-2,3,4,5-tetrafluorocyclopentadiene; 1,1-bis(methoxymethyl)-3,4-dicyclopentylcyclopentadiene; 1,1-bis(methoxymethyl)indene; 1,1-bis(methoxymethyl)-2,3-dimethylindene; 1,1-bis(methoxymethyl)-4,5,6,7-tetrahydroindene; 1,1-bis(methoxymethyl)-2,3,6,7-tetrafluoroindene; 1,1-bis(methoxymethyl)-4,7-dimethylindene; 1,1-bis(methoxymethyl)-3,6-dimethylindene; 1,1-bis(methoxymethyl)-4-phenylindene; 1,1-bis(methoxymethyl)-4-phenyl-2-methylindene; 1,1-bis(methoxymethyl)-4-cyclohexylindene; 1,1-bis(methoxymethyl)-7-(3,3,3-trifluoropropyl)indene; 1,1-bis(methoxymethyl)-7-trimethylsilylindene; 1,1-bis(methoxymethyl)-7-trifluoromethylindene; 1,1-bis(methoxymethyl)-4,7-dimethyl-4,5,6,7-tetrahydroindene; 1,1-bis(methoxymethyl)-7-methylindene; 1,1-bis(methoxymethyl)-7-cyclopentylindene; 1,1-bis(methoxymethyl)-7-isopropylindene; 1,1-bis(methoxymethyl)-7-cyclohexylindene; 1,1-bis(methoxymethyl)-7-tert-butylindene; 1,1-bis(methoxymethyl)-7-tert-butyl-2-methylindene; 1,1-bis(methoxymethyl)-7-phenylindene; 1,1-bis(methoxymethyl)-2-phenylindene; 1,1-bis(methoxymethyl)-1H-benzindene; 1,1-bis(methoxymethyl)-1H-2-methylbenzindene; 9,9-bis(methoxymethyl)fluorene; 9,9-bis(methoxymethyl)-2,3,6,7-tetramethylfluorene; 9,9-bis(methoxymethyl)-2,3,4,5,6,7-hexafluorofluorene; 9,9-bis(methoxymethyl)-2,3-benzofluorene; 9,9-bis(methoxymethyl)-2,3,6,7-dibenzofluorene; 9,9-bis(methoxymethyl)-2,7-diisopropylfluorene; 9,9-bis(methoxymethyl)-1,8-dichlorofluorene; 9,9-bis(methoxymethyl)-2,7-dicyclopentylfluorene; 9,9-bis(methoxymethyl)-1,8-difluorofluorene; 9,9-bis(methoxymethyl)-1,2,3,4-tetrahydrofluorene; 9,9-bis(methoxymethyl)-1,2,3,4,5,6,7,8-octahydrofluorene; 9,9-bis(methoxymethyl)-4-tert-butylfluorene.

Examples of the halogen atom constituting component (a) include fluorine, chlorine, bromine, iodine, or a mixture thereof, and chlorine being particularly preferred.

Examples of the organoaluminum compound of component (b) include trialkylaluminum such as triethylaluminum and tributylaluminium, trialkenylaluminum such as triisoprenylaluminum, dialkylaluminum alkoxide such as diethylaluminum ethoxide and dibutylaluminum butoxide, alkylaluminum sesquialkoxide such as ethylaluminum sesquiethoxide, butylaluminum sesquibutoxide, partially alkoxylated alkyl aluminum having the average composition of $R^1_{2.5}Al(OR^2)_{0.5}$ ($R^1$ and $R^2$ are hydrocarbon groups which may be different or the same, respectively), dialkylaluminum halogenides such as diethylaluminum chloride, dibutylaluminum chloride, diethylaluminum bromide, alkylaluminum sesquihalogenides such as ethyl aluminum sesquichloride, butyl aluminum sesquichloride, ethyl aluminum sesquibromide, partially halogenated alkylaluminum, such as alkylaluminum dihalogenide, for example ethylaluminum dichloride, propylaluminum dichloride, butylaluminum dibromide, partially hydrogenated alkylaluminum such as dialkylaluminum hydride like diethylaluminum hydride, dibutylaluminum hydride, alkylaluminum dihydride like ethyl aluminum dihydride, propyl aluminum dihydride, partially alkoxylated and halogenated alkyl aluminums such as ethyl aluminum ethoxy chloride, butyl aluminum butoxy chloride, ethyl aluminum ethoxy bromide. The above component (b) may be used alone or in combination of two or more types.

As an external electron donor compound of component (c), an organosilicon compound is used. Preferred organosilicon compounds include, for example, trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxy silane, diphenyldimethoxysilane, phenylmethyldimethoxysilane, diphenyldiethoxysilane, bis o-tolyldimethoxysilane, bis m-tolyldimethoxysilane, bis p-tolyl dimethoxysilane, bis p-tolyl diethoxysilane, bis ethylphenyl dimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, vinyltriethoxysilane, t-butyltriethoxysilane, thexyltrimethoxysilane, n-butyltriethoxysilane, iso-butyltriethoxysilane, phenyltriethoxysilane, γ-aminopropyltriethoxysilane, chlortriethoxysilane, ethyltriisopropoxysilane, vinyltributoxysilane, cyclohexyltrimethoxysilane, cyclohexyltriethoxysilane, 2-norbornane trimethoxysilane, 2-norbornane triethoxysilane, 2-norbornane methyldimethoxysilane, ethyl silicate, butyl silicate, trimethylphenoxysilane, methyltriallyloxysilane, vinyltris (β-methoxyethoxysilane), vinyltriacetoxy silane, dimethyltetraethoxydisiloxane, methyl(3,3,3-trifluoro-n-propyl)dimethoxysilane, cyclohexylethyldimethoxysilane, cyclopentyl-t-butoxydimethoxysilane, diisobutyldimethoxysilane, isobutylisopropyldimethoxysilane, n-propyltrimethoxysilane, di-n-propyldimethoxysilane, t-butylethyldimethoxysilane, t-butylpropyldimethoxysilane, t-butyl-t-butoxydimethoxysilane, isobutyltrimethoxysilane, cyclohexylisobutyldimethoxysilane, di-sec-butyldimethoxysilane, isobutylmethyldimethoxysilane, bis(decahydroisoquinolin-2-yl)dimethoxysilane, diethylaminotriethoxysilane, dicyclopentyl-bis(ethylamino)silane, tetraethoxysilane, tetramethoxysilane, isobutyltriethoxysilane, t-butyltrimethoxysilane, i-butyltrimethoxysilane, i-butylsec-butyldimethoxysilane, ethyl(perhydroisoquinolin-2-yl)dimethoxysilane, tri(isopropenyloxy)phenylsilane, i-butyl i-propyl dimethoxysilane, cyclohexyl i-butyldimethoxysilane, cyclopentyl i-butyldimethoxysilane, cyclopentylisopropyldimethoxysilane, phenyltriethoxylane, p-tolylmethyldimethoxysilane, and the like.

Among these, ethyltriethoxysilane, n-propyltriethoxysilane, n-propyltrimethoxysilane, t-butyltriethoxysilane, t-butylmethyldimethoxysilane, t-butylmethyldiethoxysilane, t-butylethyldimethoxy silane, t-butylpropyldimethoxysilane, t-butyl t-butoxydimethoxysilane, t-butyltrimethoxysilane, i-butyltrimethoxysilane, isobutylmethyldimethoxysilane, i-butylsec-butyldimethoxysilane, ethyl (perhydroisoquinoline 2-yl) dimethoxysilane, bis(decahydroisoquinolin-2-yl)dimethoxysilane, tri(isopropenyloxy)phenylsilane, thexyltrimethoxysilane, vinyltriethoxysilane, phenyltriethoxysilane, phenyltrimethoxysilane, vinyltributoxysilane, diphenyldimethoxysilane, diisopropyldimethoxysilane, diisobutyldimethoxysilane, i-butyl i-propyldimethoxysilane, cyclopentyl t-butoxydimethoxysilane, dicyclopentyldimethoxysilane, cyclohexylmethyldimethoxysilane, cyclohexyl i-butyldimethoxysilane, cyclopentyl i-butyldimethoxysilane, cyclopentylisopropyldimethoxysilane, di-sec-butyldimethoxysilane, diethylaminotriethoxysilane, tetraethoxysilane, tetramethoxysilane, isobutyltriethoxysilane, phenylmethyldimethoxysilane, phenyltriethoxylane, bis p-tolyldimethoxysilane, p-tolylmethyldimethoxysilane, dicyclohexyldimethoxysilane, cyclohexylethyldimethoxysilane, 2-norbornanetriethoxysilane, 2-norbornanemethyldimethoxysilane, diphenyldiethoxysilane, methyl(3,3,3-trifluoro-n-propyl)dimethoxysilane, ethyl silicate, and the like are preferred. The above component (c) may be used alone or in combination of two or more types.

Organosilicon compounds play an important role, especially in adjusting the amount of xylene-insoluble portion. When other catalyst components are same, the amount of xylene-insoluble portion depends on the type and amount of the organosilicon compound as well as the polymerization temperature, but even when an appropriate organosilicon compound is used, it decreases significantly when the amount of the organosilicon compound is below a certain value usually except diether catalyst. Therefore, when the polymerization temperature is 75 °C, the lower limit of the molar ratio of the organosilicon compound and the organoaluminum compound (organosilicon compound/organoaluminum) is preferably 0.015, more preferably 0.018. The upper limit of the ratio is preferably 0.30, more preferably 0.20, and even more preferably 0.10. That is, the examples include the ranges of 0.015 to 0.30, 0.015 to 0.20, 0.015 to 0.10, 0.018 to 0.30, 0.018 to 0.20, and 0.018 to 0.10.

When using a phthalate-based compound as an internal electron donor compound, elevated polymerization temperature leads to the increase of xylene-insoluble portion, and thus the lower limit and the upper limit of the preferred molar ratio of the organosilicon compound and the organoaluminum compound (organosilicon compound/organoaluminum) are lowered. Specifically, the lower limit of said molar ratio in the case of polymerization at 80 °C using a phthalate-based compound is preferably 0.010, more preferably 0.015, and even more preferably 0.018. The upper limit of said molar ratio is preferably 0.20, more preferably 0.14, and even more preferably 0.08. That is, the examples include the ranges of 0.010 to 0.20, 0.010 to 0.14, 0.010 to 0.08, 0.015 to 0.20, 0.015 to 0.14, 0.015 to 0.08, 0.018 to 0.20, 0.018 to 0.14, and 0.018 to 0.08.

As catalyst (X), it is preferred that the component (b) is a trialkylaluminum such as triethylaluminum, triisobutylaluminum, and the component (c) is an organosilicon compound such as dicyclopentyldimethoxysilane, cyclohexylmethyldimethoxysilane, diisopropyldimethoxysilane.

The method for obtaining the polymerization mixture by the multistage polymerization method is not limited to the above, and the propylene polymer (component (a1)) may be polymerized in multiple polymerization reactors, or the ethylene/α-olefin copolymer (component (a2)) may be polymerized in a plurality of polymerization reactors.

As a method for obtaining the polymerization mixture, there is also a method using a polymerization vessel having a gradient of monomer concentration or polymerization conditions. In such polymerization vessel, for example, one in which at least two polymerization regions are joined can be used, and monomers can be polymerized by gas phase polymerization.

Specifically, in the presence of a catalyst, monomers are supplied and polymerized in a polymerization region consisting of a riser pipe, monomers are supplied and polymerized in a downcomer pipe connected to the riser pipe, and the polymerization is carried out between the riser pipe and the downcomer pipe while circulating, and the polymerization product is collected. The method includes means for completely or partially preventing the gas mixture present in the riser pipe from entering the downcomer pipe. Also, a gas and/or liquid mixture having a different composition from the gas mixture present in the riser pipe is introduced into the downcomer pipe. For this polymerization method, the method described in Japanese Patent Publication No. 2002-520426 can be applied, for example.

(Method for producing ethylene/α-olefin copolymer (B))

The ethylene/α-olefin copolymer (B) can be produced by a known method using a metallocene catalyst or a half-metallocene catalyst during polymerization (as described in WO2006/102155 for example). During the polymerization, known automatic molecular weight regulators such as chain transfer agents (for example hydrogen or diethylzinc) may be used.

<Film molding>

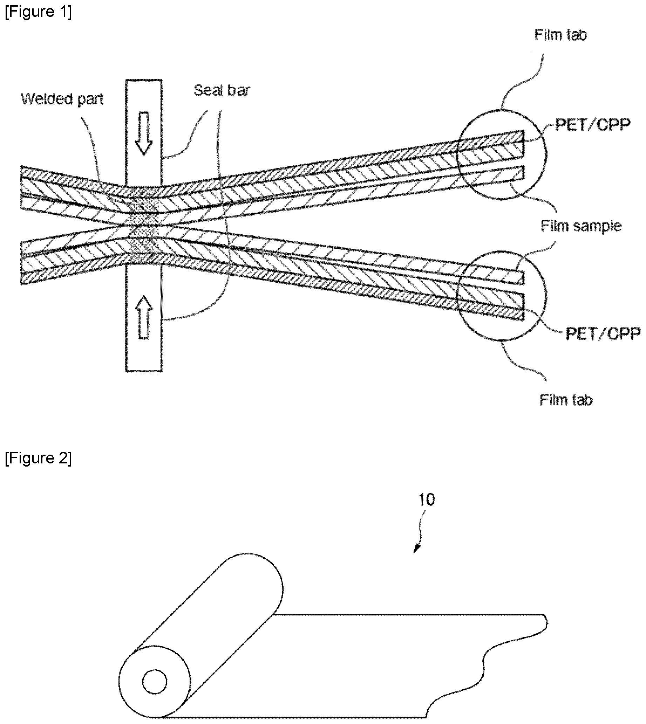

The film molding of the present invention is formed by molding the polypropylene-based resin composition of the present invention. FIG. 2 shows a roll of film molding 10 as an example of the present invention.

The film molding of the present invention can be produced, for example, by a cast molding method. It is effected at the molding temperature of, for example, 150 to 350 °C, preferably 170 to 250 °C.

The thickness of the film molding of the present invention can be, for example, 0.001 mm to 0.1 mm, preferably 0.01 to 0.09 mm, and more preferably 0.03 to 0.09 mm. The thickness of the film molding is measured using a known non-contact measuring method such as a beta-ray film thickness meter.

Since the film molding of the present invention has excellent low-temperature impact resistance, it can be used in a low-temperature environment of, for example, -20 to 10°C, preferably -10 to 4°C, more preferably -5 to 0°C.

The film impact of the film molding of the present invention at -5°C is preferably 35 kJ/m or more after retort processing when measured by the test method described below, and the higher the impact, the more preferable.

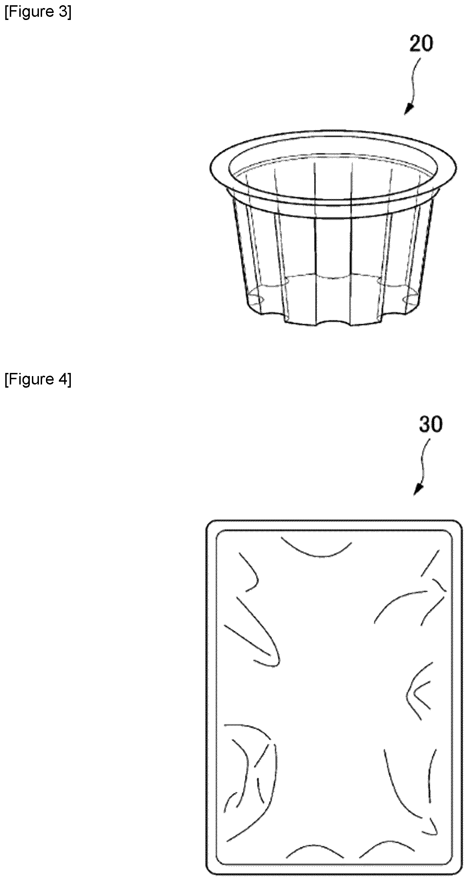

Since the film molding of the present invention is formed from a polypropylene-based resin composition with excellent food hygiene properties, it is suitable for use in contact with food, particularly for use as a packaging or a container. FIG. 3 shows a cup-shaped food container 20 formed from the film molding as an example of the present invention.

Regarding the film molding of the present invention, the amount eluted into n-hexane in the FDA test described below is preferably below 2.6% by weight, and the smaller the amount, the more preferable.

Since the film molding of the present invention has excellent adhesive strength after heat sterilization (seal strength after retort processing) in the thermocompression welded part, it is suitable for use as retort pouches (food bags that are to be subjected to heat sterilization). FIG. 4 shows a food retort pouch 30 manufactured using the film molding as an example of the present invention. In the retort pouch 30, it is preferable that the film molding of the present invention forms the inner surface that comes into contact with food. The retort pouch 30 may be formed using only the film molding of the present invention, or may be formed from a laminated film in which other layers such as an aluminum layer are laminated. The film molding of the present invention can constitute any layer of the laminated film. The retort pouch 30 is also an example of a packaging to be in contact with food according to the present invention.

Regarding the film molding of the present invention, the seal strength after retort processing measured by the test method described below is preferably 50 N/15 mm or more, and the higher the seal strength, the more preferable.

The tensile modulus of the film molding of the present invention is preferably 400 MPa or more in both the MD direction and the TD direction, and the higher the tensile modulus, the more preferable. Here, the tensile modulus is a value measured by the test method described below.

The higher the tensile modulus, the more excellent rigidity of the film molding, and more suitable for use as a packaging or container for storing solid matter inside.

[Examples of embodiment]

Examples and comparative examples are shown below, but the present invention is not limited to the following examples.

<Preparation of Copolymer 1>

A solid catalyst in which $TiCl_4$ and diisobutyl phthalate as an internal donor were supported on $MgCl_2$ was prepared by the method described in Example 5, lines 46 to 53 of European Patent No. 728769. Specifically, it was performed as follows.

Microprolate $MgCl_2.2.1C_2H_5OH$ was produced as follows. In a 2L autoclave equipped with a turbine stirrer and a suction pipe, 48 g of anhydrous $MgCl_2$, 77 g of anhydrous $C_2H_5OH$, and 830 mL of kerosene were placed in an inert gas at room temperature. Heating the contents to 120 °C with stirring resulted an adduct of $MgCl_2$ and alcohol, which was melted and mixed with the dispersant. The nitrogen pressure inside the autoclave was maintained at 15 atmospheres. The suction pipe of the autoclave was externally heated to 120 °C using a heating jacket. The suction pipe had an inner diameter of 1 mm and a length of 3 m from one end of the heating jacket to the other. The mixture was flowed through this pipe at a speed of 7 m/sec. At the outlet of the pipe, the dispersion was collected with stirring into a 5 L flask containing 2.5 L of kerosene and externally cooled with a jacket that maintained the initial temperature at -40 °C. The final temperature of the dispersion was 0 °C. The spherical solid product constituting the dispersed phase of the emulsion was allowed to settle out, separated by filtration, washed with heptane and dried. All these operations were performed in an inert gas atmosphere. $MgCl_2.3C_2H_5OH$ in the form of solid spherical particles with a maximum diameter of 50 $\mu$m or less was obtained. Yield was 130g. The product thus obtained was freed of alcohol by gradually increasing the temperature from 50 °C to 100 °C in a stream of nitrogen until the alcohol content per mole of $MgCl_2$ was reduced to 2.1 mol.

A 500 mL cylindrical glass reactor equipped with a filtration barrier was charged with 225 mL of $TiCl_4$ at 0 °C, and 10.1 g (54 mmol) of the microspheroidal $MgCl_2.2.1C_2H_5OH$ obtained as above was added for 15 minutes while the contents were stirred. Thereafter, the temperature was raised to 40 °C and 9 mmol of diisobutyl phthalate was added. The temperature was raised to 100 °C over 1 hour and stirring was continued for an additional 2 hours. $TiCl_4$ was then removed by filtration and 200 mL of $TiCl_4$ was added with stirring at 120 °C for an additional hour. Finally, the contents were filtered and washed with n-heptane at 60 °C until the filtrate was completely free of chloride ions. The catalyst component thus obtained contained 3.3 % by weight of Ti and 8.2% by weight of diisobutyl phthalate.

Then using above solid catalyst, triethylaluminum (TEAL) as an organoaluminum compound, and dicyclopentyldimethoxysilane (DCPMS) as an external electron donor compound, contacting was carried out at 12 °C for 24 minutes in the amount such that the weight ratio of TEAL to the solid catalyst was 20, and the weight ratio of TEAL/DCPMS was 10 (0.05 when converted to the above-mentioned organosilicon compound/organoaluminium molar ratio).

Prepolymerization was carried out by holding the obtained catalyst (X) in a suspended state at 20 °C for 5 minutes in liquid propylene.

The obtained prepolymerized product was introduced into the first stage polymerization reactor of a polymerization apparatus equipped with two stages of polymerization reactors in series, and propylene was supplied to produce a propylene homopolymer. Subsequently, propylene homopolymer, propylene, and ethylene were supplied to the second stage polymerization reactor to produce an ethylene/propylene copolymer. During the polymerization, temperature and pressure were adjusted and hydrogen was used as a molecular weight regulator.

The polymerization temperature and the ratio of reactants were as follows: In the first reactor, the polymerization temperature and hydrogen concentration were 80 °C and 0.12 mol%, respectively, and in the second reactor, the polymerization temperature, hydrogen concentration, and the ratio of ethylene to the total of ethylene and propylene were 80 °C, 1.33 mol %, and 0.25 mol ratio, respectively. Furthermore, the residence time distributions of the first and second stages were adjusted so that the amount of ethylene/propylene copolymer was 32% by weight.

By the above method, the targeted copolymer 1 was obtained.

The obtained copolymer 1 was a polymerized mixture of component (a1), which was a propylene polymer constituting the continuous phase, and component (a2), which was an ethylene/propylene copolymer constituting the rubber phase, and was a polypropylene-based resin (A).

For copolymer 1, molecular weight distribution $M_w/M_n$ of component (a1), ethylene-derived unit content of component (a1), weight ratio component (a2)/[component (a1) + component (a2)], ethylene-derived unit content of component (a2), the XSIV of component (a1) + component (a2), and the MFR of component (a1) + component (a2) are shown in Table 1.

In Table 1, the catalyst (X) containing a phthalate-based compound as component (a) is represented as "Pht", and the catalyst (X) containing a succinate-based compound as component (a) is represented as "Suc".

The catalyst (X) obtained by the above method is indicated as "Pht-1" in Table 1.

<Preparation of copolymers 2 to 4>

The residence times in the first and second stages were adjusted so that the weight ratio of component (a2)/[component (a1) + component (a2)] was as shown in Table 1. In addition to changing the distribution, the hydrogen concentration in the first stage was adjusted in order to adjust the MFR of component (a1)+component (a2). Regarding copolymer 3, the ratio of ethylene to the total of ethylene and propylene in the second reactor was changed so that the content of ethylene-derived units in component (a2) was as shown in Table 1. Other than that, Copolymers 2 to 4 were obtained using the same manufacturing method as in the case of Copolymer 1.

<Preparation of Copolymer 5>

A solid catalyst in which Ti and diisobutyl phthalate as an internal donor were supported on $MgCl_2$ was prepared by the method described in paragraph 0032, lines 21 to 36 of JP-A-2004-27218. Specifically, it was performed as follows.

Under a nitrogen atmosphere at 120 °C, 56.8 g of anhydrous magnesium chloride was completely dissolved in 100 g of absolute ethanol, 500 mL of vaseline oil "CP15N" manufactured by Idemitsu Kosan Co., Ltd., and 500 mL of silicone oil "KF96" manufactured by Shin-Etsu Silicone Co., Ltd. This solution was stirred for 2 minutes at 120 °C and 5000 rpm using a TK homomixer manufactured by Tokushu Kika Kogyo Co., Ltd. While maintaining stirring, it was poured into 2 L of anhydrous heptane without exceeding 0 °C. The obtained white solid was thoroughly washed with anhydrous heptane, dried under vacuum at room temperature, and further partially deethanolized under a nitrogen stream to obtain 30 g of a spherical solid of MgCl2.1.2C2H5OH. 30 g of the above spherical solid was suspended in 200 mL of anhydrous heptane. While stirring at 0 °C, 500 mL of titanium tetrachloride was added dropwise over 1 hour. Next, when heating started and the temperature reached 40 °C, 4.96 g of diisobutyl phthalate was added, and the temperature was raised to 100 °C in about 1 hour. After the reaction at 100 °C for 2 hours, a solid portion was collected by hot filtration. Thereafter, 500 mL of titanium tetrachloride was added to the reaction mixture and stirred, followed by reaction at 120 °C for 1 hour. After the reaction was completed, the solid portion was collected again by hot filtration and washed seven times with 1.0 L of hexane at 60 °C, and three times with 1.0 L of hexane at room temperature to obtain a solid catalyst. The titanium content in the obtained solid catalyst component was measured and found to be 2.36% by weight.

Copolymer 5 shown in Table 1 was obtained by the same manufacturing method as Copolymer 1 except that the above solid catalyst was used. However, the hydrogen concentration in the first stage reactor was changed to 0.11 mol%, and also the second stage residence time distribution was adjusted so that the weight ratio of component (a2)/[component (a1) + component (a2)] was 28 % by weight.

The catalyst (X) after contact with TEAL and DCPMS obtained by the above method is indicated as "Pht-2" in Table 1.

<Preparation of copolymer 6>

The hydrogen concentration and the ratio of ethylene to the sum of ethylene and propylene in the second stage reactor were changed so that the XSIV of component (a1) + component (a2) and the ethylene-derived unit content of component (a2) were the values listed in Table 1. In addition, the residence time distributions of the first and second stages were changed so that the weight ratio of component (a2)/[component (a1) + component (a2)] was as shown in Table 1, and the hydrogen concentration in the first stage was adjusted in order to change the MFR of component (a1) + component (a2) to the value shown in Table 1. Copolymer 6 was obtained using the same manufacturing method as Copolymer 5 except for the above.

<Preparation of copolymers 7 and 8>

The ratio of ethylene to the total of ethylene and propylene in the second stage reactor was adjusted so that the content of ethylene-derived units in component (a2) was as shown in Table 1. Copolymers 7 to 8 were obtained in the same manner as in the case of Copolymer 1 except for above adjustments.

<Preparation of copolymers 9 and 10>

The hydrogen concentration in the second stage reactor was changed so that the XSIV of component (a1) + component (a2) was the value listed in Table 1, and also the hydrogen concentration in the first stage was adjusted in order to adjust the MFR of component (a1) + component (a2). Copolymers 9 and 10 were obtained in the same manner as in the case of Copolymer 1 except for the above.

<Preparation of copolymers 11 and 12>

The hydrogen concentration in the first stage was adjusted so that the MFR of component (a1) + component (a2) was the value listed in Table 1. Copolymers 11 and 12 were obtained using the same manufacturing method as Copolymer 1 except for the above.

<Preparation of Copolymer 13>

A solid catalyst was prepared in accordance with the preparation method described in Examples of Japanese Patent Application Publication No. 2011-500907 using the following procedure.

Into a 500 mL four-necked round bottom flask purged with nitrogen, 250 mL of TiCl4 was introduced at 0 °C. With stirring, 10.0 g of microspheroidal $MgCl_2.1.8C_2H_5OH$ (prepared according to the method described in Example 2 of USP-4,399,054, but operated at 3000 rpm instead of 10000 rpm), and 9 .1 mmol of diethyl-2,3-(diisopropyl)succinate were added. The temperature was raised to 100 °C and held for 120 minutes. Then, stirring was stopped, the solid product was allowed to settle, and the supernatant liquid was suctioned. The following operation was then repeated twice: 250 mL of fresh $TiCl_4$ was added, the mixture was allowed to react at 120 °C for 60 minutes, and the supernatant liquid was suctioned. The solid was washed six times with anhydrous hexane (6 × 100 mL) at 60 °C.

The solid catalyst, TEAL and DCPMS were brought into contact with each other at room temperature for 5 minutes in such amount that the weight ratio of TEAL to the solid catalyst was 18 and the weight ratio of TEAL/DCPMS was 10. Prepolymerization was carried out by holding the obtained catalyst (X) in a suspended state at 20 °C for 5 minutes in liquid propylene. The obtained prepolymerized product was introduced into the first stage polymerization reactor of a polymerization apparatus equipped with two stages of polymerization reactors in series, and propylene was supplied to produce a propylene homopolymer. Subsequently, propylene homopolymer, propylene, and ethylene were supplied to the second stage polymerization reactor to produce an ethylene/propylene copolymer. During the polymerization, temperature and pressure were adjusted and hydrogen was used as a molecular weight regulator.

The polymerization temperature and the ratio of reactants were as follows: In the first reactor, the polymerization temperature and hydrogen concentration were 80 °C and 0.14 mol%, respectively, and in the second reactor, the polymerization temperature, hydrogen concentration, and the ratio of ethylene to the total of ethylene and propylene were 80 °C, 1.33 mol %, and 0.25 mol ratio, respectively. Furthermore, the residence time distributions of the first and second stages were adjusted so that the amount of ethylene/propylene copolymer was 32% by weight. By the above method, the targeted copolymer 13 was obtained.

Regarding copolymer 13, molecular weight distribution $M_w/M_n$ of component (a1), ethylene-derived unit content of component (a1), weight ratio component (a2)/[component (a1) + component (a2)], ethylene-derived unit content of component (a2), the XSIV of component (a1) + component (a2), and the MFR of component (a1) + component (a2) are shown in Table 1. Copolymers 2 to 13 obtained above were measured in the same manner as for Copolymer 1, and the results are shown in Table 1.

[Table 1]

| | Copolymer 1 | Copolymer 2 | Copolymer 3 | Copolymer 4 | Copolymer 5 | Copolymer 6 | Copolymer 7 | Copolymer 8 | Copolymer 9 | Copolymer 10 | Copolymer 11 | Copolymer 12 | Copolymer 13 |
|---|---|---|---|---|---|---|---|---|---|---|---|---|---|
| Type | | | | | | | | | | | | | |
| Catalyst | Pht-1 | Pht-1 | Pht-1 | Pht-1 | Pht-2 | Pht-2 | Pht-1 | Pht-1 | Pht-1 | Pht-1 | Pht-1 | Pht-1 | Suc |
| Molecular weight distribution of component (a1) Mw/Mn | 6 | 6 | 6 | 6 | 6 | 6 | 6 | 6 | 6 | 6 | 6 | 6 | 9 |
| Content of ethylene-derived unit in component (a1) (weight %) | 0 | 0 | 0 | 0 | 0 | 0 | 0 | 0 | 0 | 0 | 0 | 0 | 0 |
| Type of component (a2) | C2C3 | C2C3 | C2C3 | C2C3 | C2C3 | C2C3 | C2C3 | C2C3 | C2C3 | C2C3 | C2C3 | C2C3 | C2C3 |
| Weight ratio Component (a2)/[component (a1) + component (a2)] (weight %) | 32 | 41 | 32 | 30 | 28 | 20 | 32 | 32 | 32 | 32 | 32 | 32 | 32 |

(continued)

| Type | Copolymer 1 | Copolymer 2 | Copolymer 3 | Copolymer 4 | Copolymer 5 | Copolymer 6 | Copolymer 7 | Copolymer 8 | Copolymer 9 | Copolymer 10 | Copolymer 11 | Copolymer 12 | Copolymer 13 |
|---|---|---|---|---|---|---|---|---|---|---|---|---|---|
| Content of ethylene-derived unit in component (a2) (weight %) | 30 | 30 | 37 | 30 | 30 | 50 | 23 | 42 | 30 | 30 | 30 | 30 | 30 |
| XSIV of component (a1) + component (a2) (dl/g) | 2.8 | 2.8 | 2.8 | 2.8 | 2.8 | 3.2 | 2.8 | 2.8 | 2.3 | 3.7 | 2.8 | 2.8 | 2.8 |
| MFR of component (a1) + component (a2) [230 °C, 2.16 kg] (g/10min) | 2.0 | 2.0 | 2.0 | 2.0 | 2.0 | 2.2 | 2.0 | 2.0 | 2.0 | 2.0 | 0.3 | 5.0 | 2.0 |

Each measurement value in Table 1 was measured by the following method.

<M_w/M_n of component (a1)>

A 2.5 g sample of component (a1) polymerized in the first stage reactor was used as the measurement sample, and the number average molecular weight ($M_n$) and weight average molecular weight ($M_w$) were measured, and the weight average molecular weight ($M_w$) was divided by the number average molecular weight ($M_n$) to determine the molecular weight distribution ($M_w/M_n$).

The device used was PL GPC220 manufactured by Polymer Laboratories, the mobile phase was 1,2,4-trichlorobenzene containing an antioxidant, and the columns were UT-G (1 column), UT-807 (1 column) and UT-806M (2 columns), manufactured by Showa Denko., connected in series, and a differential refractometer was used as a detector. In addition, the same solvent as the mobile phase was used as the solvent for the sample solution, and a measurement sample was prepared by dissolving for 2 hours under stirring at the temperature of 150 °C in a sample concentration of 1 mg/mL. 500 $\mu$L of the resulting sample solution was injected into the column, and measurement was performed at a flow rate of 1.0 mL/min, a temperature of 145 °C, and a data collection interval of 1 second. The column was calibrated using cubic approximation using a polystyrene standard sample (Shodex STANDARD, manufactured by Showa Denko K.K.,) with a molecular weight of 5.8 million to 7.45 million. The Mark-Houwink-Sakurada coefficients of K = 1.21 $\times$ 10$^{-4}$, $\alpha$ = 0.707 for polystyrene standard samples, and K=1.37$\times$10$^{-4}$ and $\alpha$=0.75 for polypropylene homopolymers, propylene random copolymers, and polypropylene-based polymers were used.

<Total ethylene amount of copolymer, content of ethylene-derived units in component (a1)>

For copolymer samples dissolved in a mixed solvent of 1,2,4-trichlorobenzene/deuterated benzene, AVANCE III HD400 manufactured by Bruker (13C resonance frequency 100 MHz) was used to obtain a 13C-NMR spectrum under the following conditions: measurement temperature 120 °C, flip angle 45 degrees, pulse interval 7 seconds, sample rotation speed 20 Hz, and number of integrations 5000 times.

Using the spectrum obtained above, the total ethylene content of the copolymer (weight %) was determined by the method described in the literature by Kakugo, Y. Naito, K. Mizunuma and T. Miyatake, Macromolecules, 15, 1150-1152 (1982).

In addition, when measuring component (a1) as a sample, the total ethylene amount (weight %) obtained by the above method is the ethylene unit content (weight %) of component (a1).

<Ethylene unit content in component (a2)>

The ethylene unit content (weight %) of component (a2) was determined by calculating in the same manner as the total ethylene amount, except that instead of the integrated intensity of T$\beta\beta$ obtained when measuring the total ethylene amount of the copolymer by the method described in the above literature, the integrated intensity T'$\beta\beta$ obtained by the following formula was used.

$$T'\beta\beta = 0.98 \times S\alpha\gamma \times A/(1-0.98 \times A)$$

Here, A=S$\alpha\gamma$/(S$\alpha\gamma$+S$\alpha\delta$), which is calculated from S$\alpha\gamma$ and S$\alpha\delta$ described in the above literature.

<Weight ratio component (a2)/[component (a1)+component (a2)]>

It was determined by the following formula.

Component (a2) / [component (a1) + component (a2)] (unit: weight %) = total ethylene amount of copolymer / (ethylene unit content in component (a2) / 100)

<XSIV of component (a1) + component (a2)>

A xylene-soluble portion of the copolymer was obtained by the following method, and the intrinsic viscosity (XSIV) of the xylene-soluble portion was measured.

2.5 g of the copolymer sample was placed in a flask containing 250 mL of o-xylene (solvent), and stirred for 30 minutes using a hot plate and reflux device at 135 °C while purging with nitrogen to completely dissolve, and then cooled at 25 °C for 1 hour. The resulting solution was filtered using filter paper. 100 mL of the filtrate after filtration was collected, transferred to an aluminum cup and the like, and evaporated to dryness at 140 °C while purging with nitrogen, and left standing at room temperature for 30 minutes to obtain a xylene-soluble portion.

The intrinsic viscosity was measured in tetrahydronaphthalene at 135 °C using an automatic capillary viscosity measuring device (SS-780-H1, manufactured by Shibayama Scientific Instruments Co., Ltd.).

<MFR of component (a1) + component (a2)>

0.05g of H-BHT manufactured by Honshu Chemical Industry Co., Ltd., was added to 5g of a sample of the copolymer, and after homogenization by dry blending, according to JIS K7210-1., measured in accordance with JIS K6921-2 at a temperature of 230 °C and a load of 2.16 kg.

[Examples and Comparative Examples]

Components (A) to (B) were blended according to the composition shown in Table 2, and 0.2 parts by weight of B225 manufactured by BASF was added as an antioxidant and 0.05 parts by weight of calcium stearate manufactured by Tannan Kagaku Kogyo Co., Ltd., as a neutralizing agent were added to 100 parts by weight of the total amount of components (A) to (B), and the mixture was stirred and mixed for 1 minute using a Henschel mixer. The mixture was melt-kneaded and extruded at a cylinder temperature of 230 °C using a co-directional twin-screw extruder TEX-30α manufactured by JSW Corporation. After cooling the strand in water, it was cut with a pelletizer to obtain pellets of the polypropylene-based resin composition. Various physical properties of the polypropylene-based resin composition thus produced and the film molding obtained using the same were evaluated. The results are shown in Table 2.

[Table 2]

| | | | Example 1 | Example 2 | Example 3 | Example 4 | Comparative example 1 | Comparative example 2 | Comparative example 3 | Comparative example 4 | Comparative examples | Comparative example 6 | Comparative example 7 | Comparative example 8 | Comparative examples |
|---|---|---|---|---|---|---|---|---|---|---|---|---|---|---|---|
| Resin composition | Component (A) | Type | Copolymer 1 | Copolymer 2 | Copolymer 3 | Copolymer 4 | Copolymer 5 | Copolymer 6 | Copolymer 7 | Copolymer 8 | Copolymer 9 | Copolymer 10 | Copolymer 11 | Copolymer 12 | Copolymer 13 |
| | | Weight ratio (parts by weight) | 100 | 100 | 100 | 96 | 100 | 100 | 100 | 100 | 100 | 100 | 100 | 100 | 100 |
| | Component (B) | Type | Not contained | Not contained | Not contained | B-1 | Not contained | Not contained | Not contained | Not contained | Not contained | Not contained | Not contained | Not contained | Not contained |
| | | Weight ratio (parts by weight) | | | | 4 | | | | | | | | | |
| | Other component | Antioxidant, neutralizing agent | Contained | Contained | Contained | Contained | Contained | Contained | Contained | Contained | Contained | Contained | Contained | Contained | Contained |
| | Fluidity: MFR [230°C, 2.16 kg] (g/10min) | | 2.0 | 2.0 | 2.0 | 2.0 | 2.0 | 2.2 | 2.0 | 2.0 | 2.0 | 2.0 | 0.3 | 5.0 | 2.0 |

EP 4 361 211 A1

19

| Film molding | | Example 1 | Example 2 | Example 3 | Example 4 | Comparative example 1 | Comparative example 2 | Comparative example 3 | Comparative example 4 | Comparative examples | Comparative example 6 | Comparative example 7 | Comparative example 8 | Comparative examples |
|---|---|---|---|---|---|---|---|---|---|---|---|---|---|---|
| | PP factory productivity (◎: Excellent ○: Good △: Fair×: Not possible) | ◎ | ○ | ◎ | ◎ | ◎ | ◎ | △ | ◎ | ◎ | ◎ | △ | ◎ | ○ |
| | Rigidity: tensile modulus (MPa) MD/TD (before retort) | 500/470 | 420/400 | 430/460 | 520/480 | 580/510 | 650/610 | 520/500 | 490/460 | 500/460 | 510/480 | 490/460 | 540/500 | 520/510 |
| | Film impact (kJ/m) @-5°C (before/after retort) | 36/38 | 40/45 | 39/42 | 37/36 | 32/34 | 32/33 | 32/34 | 38/41 | 33/34 | 40/42 | 41/44 | 32/34 | 30/33 |
| | FDA test C6 elution amount (wt%) | 1.7 | 2.3 | 2.0 | 1.5 | 1.3 | 1.1 | 1.0 | 2.7 | 1.6 | 1.7 | 1.5 | 1.9 | 2.0 |
| | Seal strength (N/15mm) seal temp. 170°C after retort | 55 | 52 | 54 | 55 | 54 | 70 | 55 | 56 | 48 | 60 | 56 | 50 | 52 |
| | Whitening resistance (◎: Excellent ○: Good △: Fair ×: Not possible) before retort | ○ | ○ | ○ | ○ | ○ | × | ◎ | × | ○ | ○ | ○ | ○ | △ |
| | FE (◎: Excellent ○: Good △: Fair ×: Not possible) before retort | ◎ | ○ | ○ | ◎ | ◎ | × | ◎ | ◎ | ◎ | × | ◎ | △ | ◎ |
| | Film moldability (○: Good △: Fair ×: Not possible) | ○ | ○ | ○ | ○ | ○ | ○ | ○ | ○ | ○ | ○ | × | △ | ○ |
| | Film productivity (○: Good △: Acceptable ×: Not possible) | ○ | ○ | ○ | ○ | ○ | × | ○ | ○ | ○ | × | × | △ | ○ |

EP 4 361 211 A1

Each component in Table 2 is as follows.

Component (A) is copolymers 1 to 13 in Table 1.

Component (B) is the following ethylene/α-olefin copolymer.

B-1: Mitsui Chemicals, Tafmer A4085, ethylene/butene copolymer, MFR (190°C, 2.16 kg) = 3.6 g/10 minutes

Other ingredients are the following additives.

Antioxidant: B225 manufactured by BASF

Neutralizing agent: Calcium stearate manufactured by Tannan Chemical Industry Co., Ltd.

The measurement results and evaluation results in Table 2 are values measured and evaluated by the following method.

<PP factory productivity>

The ease of producing component (A) using the above method was evaluated on the following four scales.

"◎": Excellent = Manufactured without any problems.
"○": Good = Manufactured without problems.
"△" : Fair = Barely able to produce, but production volume and fluff (powder) properties were slightly inferior.
"×": Not possible = A problem occurred during production and production could not be completed.

<Fluidity MFR>

The MFR of the polypropylene-based resin composition was measured in accordance with JIS K7210-1 and based on JIS K6921-2 under the conditions at a temperature of 230 °C and a load of 2.16 kg.

The MFR of the ethylene/α-olefin copolymer was measured at a temperature of 190 °C and a load of 2.16 kg based on JIS K6922-2.

<Film molding>

Using a 3-type, 3-layer, φ25 mm film/sheet molding device manufactured by Thermoplastics Industries Co., Ltd., the cylinder-to-die temperature was controlled at 250°C, and the molten resin extruded from the die using the pellets as raw material was taken off while cooling and solidifying with a cooling roll at a molding speed of 5.6 m/min to obtain a film with a thickness of 60 μm.

In Example 4, a film was formed using a raw material obtained by dry blending component (B) in component (A), which is the main raw material.

The formed film was aged at 40 °C for 24 hours or more, and further conditioned in a constant temperature room at 23 °C for 1 hour or more, and then used as a sample.

<Rigidity Tensile Modulus>

Based on JIS K7161, a sample cut from a film sample was pulled at a tensile speed of 5 mm/min using T. S.E.'s Tensilon (Autocom), and the tensile modulus was determined as the value obtained by dividing the load at 2% of the extensibility of the tangent line subtracted from the 0 point of the stress-strain curve by the cross-sectional area of the sample. The tensile modulus of each film sample was measured in the MD direction and the TD direction.

<Retort processing>

The film sample was placed in a high temperature and high pressure cooking sterilizer (RCS-40RTG-FAM) manufactured by Hisaka Seisakusho, and heat sterilized at 135°C for 30 minutes using the hot water displacement method, cooled with cold water, and then the film sample was removed from the apparatus. A retort-treated (high-temperature and high-pressure sterilized) film sample was thus obtained.

<Film Impact>

A pendulum impact resistance test of a plastic film was conducted based on ASTM-D3420. Specifically, the impact strength of a film sample with a width of 100 mm (in the TD direction) was measured in an atmosphere of -5 °C using an impact tester equipped with a thermostatic chamber (manufactured by Toyo Seiki Seisakusho Co., Ltd.). This measured value was divided by the thickness of the sample to calculate the film impact strength (unit: kJ/m). The larger this calculated value is, the better the low-temperature impact resistance is. The samples before and after the above-mentioned retort processing were measured.

<FDA test>

For the purpose of testing the amount of components eluted (elution amount) from a film sample (those that have not yet undergone retort processing), the n-hexane elution amount (Test method: §177.1520(d)(3)(ii), Compliance number: §177.1520(c)3.2a) was tested.

In addition, when the use of the film includes retort processing, current FDA standards require that the elution amount be less than 2.6% by weight.

<Seal Strength>

Based on JIS Z0238, the seal strength of the sample obtained by heat sealing film samples was tested. First, two film samples (those that have not been subjected to retort processing) were placed with their surfaces facing each other, and a commercially available PET/CPP dry laminated product (thickness 80 $\mu$m) was layered as a backing material on the back side of each film sample. Next, as shown in Fig. 1, the laminated material was sandwiched between a pair of aluminum seal bars that had been adjusted to a predetermined temperature using a heat seal tester (manufactured by Tester Sangyo Co., Ltd.), and was applied with a gauge pressure of 0.2 MPa for 1 second and thermocompression bonding was carried out at 170 °C. Thereafter, the sample taken out was rapidly cooled with ice water to obtain a sample in which only the portions welded by the heat of the seal bar were sealed. This sample was cut to a width of 15 mm and subjected to the retort processing described above. Using an Autocom (manufactured by T. S.E.), a pair of film tabs following the sealing area were pulled in the opposite directions (pulling speed: 300 mm/ minutes), and the strength (unit: N/15 mm) at which the seal location peeled or broke was measured and defined as the seal strength.

<Whitening resistance>

When a film sample (not subjected to retort processing) cut into 10 cm squares was folded in half and opened, the degree of whitening of the folding marked was evaluated using the following 4-level criteria.

"◎": Excellent: No whitening occurred.
"○": Good: Very slight whitening was observed.
"△": Fair: Whitening occurred, but the degree of whitening was weak.
"×": Not acceptable: Deep whitening and bending marks were clearly visible.

<Fish Eye (FE)>

The number of FEs with a size of 0.1 to 0.5 mmcp that occurred per standard area of a film sample (not subjected to retort processing) was measured and evaluated on the following four levels..

"◎": Excellent: 10/m2 or less
"○": Good: 11-20/m2
"△": Acceptable: 21-30/m2
"×": Not acceptable: 31/m2 or more

<Film moldability>

The film obtained by the above molding method was evaluated on the following three scales.

"O": Good: A good product with no problems in shape, thickness, etc., was obtained.
"△": Acceptable: Some defective products were found.
"×": Not acceptable: Good product was not obtained.

**EP 4 361 211 A1**

<Film Productivity>

In carrying out the above film molding while suppressing the occurrence of FE, the degree of film productivity due to the problem of reduced production speed was evaluated on the following three levels.

"○": Good: There were no problems and production was easy.
"△": Acceptable: Molding is possible if special equipment such as a polymer filter is used, but production speed will be reduced.
"×": Not possible: Production speed was significantly reduced and it was difficult to produce the film.

«Effects»

Since the films of Examples 1 to 4 use polypropylene-based resin compositions having predetermined physical properties, they satisfy the standards in each evaluation of rigidity, low-temperature impact resistance, amount of elution into n-hexane in FDA tests, seal strength, whitening resistance against bending, amount of fish eyes, film moldability, and film productivity.

In order to meet the standards for a film to be in contact with food, the present inventors have carefully studied the formulation of the entire composition. That is, in order to reduce the amount of n-hexane eluted in the FDA test, it was necessary to keep the content of ethylene-derived units in component (a2) low, which led to the problem of poor mechanical properties. For example, since the content of ethylene-derived units in component (a2) affects the rubbery properties of the composition, impact resistance at low temperatures tends to decrease. For this reason, by carefully adjusting other parameters such as the molecular weight distribution of component (a1), the content of component (a2), and the XSIV value and MFR of component (a1) + component (a2), the present invention was completed by achieving a high balance of other mechanical properties while satisfying the requirements of FDA test standards (less than 2.6 % by weight).

In Comparative Example 1, the content of component (a2) in component (A) is small, and the low-temperature impact resistance after retort processing is poor.

In Comparative Example 2, although the content of ethylene-derived units in component (a2) is high and the content of component (a2) in component (A) is low, the low-temperature impact resistance after retort processing is not inferior. However, the whitening resistance is low, the number of FE generated is high, and the film productivity is poor.

In Comparative Example 3, the content of ethylene-derived units in component (a2) is small, and component (A) can barely be produced, but there are problems that the production volume and fluff properties are poor. Furthermore, Comparative Example 3 has poor low-temperature impact resistance after retort processing.

Comparative Example 4 has a high content of ethylene-derived units in component (a2), a large amount of elution into n-hexane in the FDA test, and poor whitening resistance.

Comparative Example 5 has a small XSIV of component (a1)+component (a2), poor low-temperature impact resistance after retort processing, and poor seal strength after retort processing.

In Comparative Example 6, the XSIV of component (a1)+component (a2) is high, the number of FE generated is high, and the film productivity is poor.

Comparative Example 7 can barely produce component (A), but there is a problem that the production volume is low. Further, in Comparative Example 7, the fluidity of component (a1) + component (a2) and the fluidity of the resin composition are low, and the film moldability and film productivity are poor.

In Comparative Example 8, the fluidity (MFR) of component (a1)+component (a2) is higher than the others, and this is due to the high MFR of component (a1). It is common knowledge among those skilled in the art that MFR and $M_w$ are inversely correlated, so if the $M_w$ of component (a1) is low (the higher the better the impact resistance is), the low-temperature impact resistance after retort processing is inferior. In addition, it is common knowledge among those skilled in the art that MFR and melt viscosity are inversely correlated. As a result of the low melt viscosity of component (a1) and the relatively high ratio of melt viscosity of component (a2) to that of component (a1), the occurrence of FE is relatively high compared to the XSIV of component (a1)+component (a2) due to poor dispersion of component (a2). In addition, the melt viscosity of component (a1) + component (a2) and the melt viscosity of the resin composition are insufficient, resulting in poor film moldability (film formability) and reduced film productivity to obtain a film with less FE.

In Comparative Example 9, the $M_w/M_n$ of component (a1) is large, and the whitening resistance and low-temperature impact resistance after retort processing are poor.

**Claims**

1. A polypropylene-based resin composition comprising

a polypropylene-based resin (A) including a continuous phase consisting of a propylene polymer (a1) and a rubber phase consisting of a copolymer (a2) of ethylene and $\alpha$-olefin having 3 to 10 carbon atoms, and an ethylene/$\alpha$-olefin copolymer (B) which is a copolymer of ethylene and $\alpha$-olefin having 3 to 10 carbon atoms as an optional component,

wherein the content of the polypropylene-based resin (A) is 90 % by weight or more and less than 100 % by weight with respect to the total weight of the polypropylene-based resin composition,

the content of the ethylene/$\alpha$-olefin copolymer (B) is 0 to 10 % by weight with respect to the total weight of the (A) and (B),

the MFR of the polypropylene-based resin composition at a temperature of 230 °C and a load of 2.16 kg is 0.5 to 4.0 g/10 min,

the ratio ($M_w/M_n$) between the weight average molecular weight $M_w$ and the number average molecular weight $M_n$ of the propylene polymer (a1) is less than 7,

the content of ethylene-derived units in the propylene polymer (a1) is 0.5 % by weight or less with respect to the total weight of the propylene polymer (a1),

the content of the copolymer (a2) is 30 to 43 % by weight with respect to the total weight of the polypropylene-based resin (A),

the content of ethylene-derived units in the copolymer (a2) is 25 to 40 % by weight with respect to the total weight of the copolymer (a2),

the xylene-soluble portion of the polypropylene-based resin (A) has an intrinsic viscosity in tetrahydronaphthalene at 135 °C of 2.5 to 3.5 dl/g, and

the MFR of the polypropylene-based resin (A) at a temperature of 230 °C and a load of 2.16 kg is 0.5 to 4.0 g/10 minutes.

2. The polypropylene-based resin composition according to claim 1, wherein the propylene polymer (a1) and the copolymer (a2) are mixed by polymerization, the polypropylene-based resin (A) is a polymerization mixture prepared by using a catalyst containing the following components (a) to (c);

(a) a solid catalyst containing magnesium, titanium, halogen, and a phthalate-based compound as an electron donor compound,
(b) an organoaluminum compound, and
(c) an organosilicon compound as an external electron donor compound.

3. A method for producing the polypropylene-based resin composition according to claim 1, comprising the step of polymerizing ethylene monomer and $\alpha$-olefin monomer having 3 to 10 carbon atoms in the presence of the propylene polymer (a1) using a catalyst containing the following components (a) to (c) to obtain the polypropylene-based resin (A);

(a) a solid catalyst containing magnesium, titanium, halogen, and a phthalate-based compound as an electron donor compound as essential components,
(b) an organoaluminum compound, and
(c) an oqrganosilicon compound as an external electron donor compound.

4. A film molding formed from the polypropylene-based resin composition according to claim 1.

5. The film molding according to claim 4, used as a packaging or a container to be in contact with food.

6. The film molding according to claim 4, used as at least a part of a retort pouch.

7. A packaging to be in contact with food, formed from the film molding according to claim 4.

8. A container to be in contact with food, formed from the film molding according to claim 4.

9. A retort pouch formed from the film molding according to claim 4.

[Figure 1]

[Figure 2]

[Figure 3]

20

[Figure 4]

30

## INTERNATIONAL SEARCH REPORT

| International application No. |
| --- |
| **PCT/JP2022/025350** |

**A. CLASSIFICATION OF SUBJECT MATTER**

**C08L 23/10**(2006.01)i; **B65D 30/02**(2006.01)i; **C08F 2/44**(2006.01)i; **C08F 4/654**(2006.01)i; **C08F 255/02**(2006.01)i; **C08L 23/08**(2006.01)i; **C08L 23/16**(2006.01)i

FI: C08L23/10; C08L23/08; C08L23/16; C08F4/654; C08F2/44 C; C08F255/02; B65D30/02

According to International Patent Classification (IPC) or to both national classification and IPC

**B. FIELDS SEARCHED**

Minimum documentation searched (classification system followed by classification symbols)

C08L23/10; B65D30/02; C08F2/44; C08F4/654; C08F255/02; C08L23/08; C08L23/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2000-204175 A (CHISSO CORP) 25 July 2000 (2000-07-25)<br>claims 1-3, paragraphs [0015]-[0016], [0018]-[0022], [0033]-[0035], [0038]-[0056], examples 1, 7 | 1-9 |
| A | JP 2003-055479 A (SHOWA DENKO PLASTIC PRODUCTS CO LTD) 26 February 2003 (2003-02-26)<br>claims 1, paragraphs [0001], [0025]-[0035] | 1-9 |
| A | US 2011/0207883 A1 (DOUFAS, Antonios K. et al.) 25 August 2011 (2011-08-25)<br>paragraphs [0030]-[0047] | 1-9 |
| A | JP 06-240068 A (TOKUYAMA SODA CO LTD) 30 August 1994 (1994-08-30)<br>paragraph [0003] | 1-9 |
| A | JP 2019-137848 A (PRIME POLYMER CO LTD) 22 August 2019 (2019-08-22)<br>paragraph [0003] | 1-9 |
| A | JP 2008-506825 A (BASELL POLYOLEFINE GMBH) 06 March 2008 (2008-03-06)<br>paragraphs [0063], [0064] | 1-9 |

☐ Further documents are listed in the continuation of Box C.    ✓ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 September 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2022/025350** |

| Patent document cited in search report | | | Publication date (day/month/year) | Patent family member(s) | | | Publication date (day/month/year) |
|---|---|---|---|---|---|---|---|
| JP | 2000-204175 | A | 25 July 2000 | (Family: none) | | | |
| JP | 2003-055479 | A | 26 February 2003 | (Family: none) | | | |
| US | 2011/0207883 | A1 | 25 August 2011 | CA | 2732126 | A1 | |
| JP | 06-240068 | A | 30 August 1994 | (Family: none) | | | |
| JP | 2019-137848 | A | 22 August 2019 | (Family: none) | | | |
| JP | 2008-506825 | A | 06 March 2008 | US paragraphs [0112]-[0113] | 2008/0027190 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021105706 A
- JP 2019189818 A
- JP 2002520426 A
- WO 2006102155 A
- EP 728769 A
- JP 2004027218 A
- JP 2011500907 A
- US 4399054 A

**Non-patent literature cited in the description**

- **KAKUGO ; Y. NAITO ; K. MIZUNUMA ; T. MIYATAKE.** *Macromolecules,* 1982, vol. 15, 1150-1152